# EUROPÄISCHE PATENTSCHRIFT

(11) **EP 2 716 673 B1**
(45) Veröffentlichungstag und Bekanntmachung des Hinweises auf die Patenterteilung: **06.04.2016**
(21) Anmeldenummer: 12187180.0
(22) Anmeldetag: 04.10.2012
(51) Int. Cl.: C08G 18/10, C08G 18/22, C08G 18/48, C08G 18/61, C08G 18/73, C08L 75/08, C08K 3/22, C08K 3/36, C09K 3/10

(54) **Formteile auf Basis von Reaktionsprodukten aus Polyolen und Isocyanaten**
Moulded parts on the basis of reaction products from polyols and isocyanates
Pièces de formage à base de produits de réaction composés de polyols et d'isocyanates

(43) Veröffentlichungstag der Anmeldung: 09.04.2014
(73) Patentinhaber: Evonik Degussa GmbH, 45128 Essen (DE); TechnoGel GmbH, 37115 Duderstadt (DE)
(72) Erfinder: Glos, Martin Dr., 46325 Borken (DE); Kleinen, Jochen Dr., 45131 Essen (DE); Venzmer, Joachim Dr., 45239 Essen (DE); Gansen, Peter Dr., 37136 Seeburg (DE); Ausmeier, Matthias, 37520 Osterode am Harz (DE); Klingebiel, Frank Stefan, 37115 Duderstadt (DE)

(56) Entgegenhaltungen:
- EP-A1- 0 982 338
- EP-A1- 1 125 975
- EP-A1- 1 529 789
- EP-A2- 0 129 858
- JP-A- 62 146 954
- US-A- 4 456 642
- US-A- 5 952 072

## Beschreibung

Die vorliegende Erfindung betrifft Formmassen, enthaltend die Komponenten, a) ein oder mehrere Polyisocyanate, b) ein oder mehrere Polyole, c) ein oder mehrere die Reaktion zwischen Polyisocyanat und Polyol katalysierende Katalysatoren und d) ein oder mehrere pyrogen hergestellte Oxide eines Metalls oder Metalloids, welche dadurch gekennzeichnet sind, dass sie als weitere Komponente e) mindestens ein oder mehrere Siloxane enthalten, Formteile erhältlich unter Verwendung dieser Formmassen sowie ein Verfahren zur Herstellung der Formteile.

### Stand der Technik:

WO 2009/092505 beschreibt die Herstellung von Polyurethan-Isolierschaumstoffen, wobei als Nukleierungsmittel poröse Feststoffe, insbesondere Zeolithe eingesetzt werden.

EP 0057838 A1 beschreibt die Herstellung von Gel-Polstern, wobei das Gel aus einer hochmolekularen Matrix aus kovalent vernetztem Polyurethan und in der Matrix durch Nebenvalenzkräfte fest gebundenen, flüssigen Dispersionsmittels aus einer oder mehreren Polyhydroxylverbindungen aufgebaut ist. Zur Herstellung der Gel-Polster wird die Reaktionsmischung in vorbereitete Umhüllungen gegossen und dort die Gelreaktion abgeschlossen.

EP 0511570 A1 beschreibt Gelmassen auf der Basis von Reaktionsprodukten aus Polyolen und Polyisocyanaten, wobei als Polyole Mischungen aus Polyolen mit unterschiedlicher Hydroxylzahlen eingesetzt werden. Zur Herstellung der Gelmassen werden die Reaktionsmischungen wiederum in vorbereitete Umhüllungen gegossen und dort die Gelreaktion abgeschlossen.

EP 1125975 A1 beschreibt die Herstellung von Gelmassen auf Basis von Reaktionsprodukten aus Polyisocyanaten und Polyolen, die zur Verbesserung der mechanischen Zugfestigkeit und der Bruchdehnung mindestens ein pyrogen hergestelltes Oxid eines Metalls oder Metalloids enthalten. Auch hier erfolgt die Formgebung der Gelmasse durch gießen der Reaktionsmischung in eine Unhüllung oder Form.

In Rheol. Acta (2005) 44, 644-653 (DOI 10.2007/s00397-005-0446-3) beschreiben Saint Michel et al. die Änderungen der rheologischen Eigenschaften von Mischungen aus einer durch Silica gelierten Polymermatrix enthaltend Polyol, Katalysator und Tensid durch Zugabe von CaCO₃-Partikel mit einer Partikelgröße im Mikrometerbereich. Als Tensid wird ein Polydimethylsiloxan/Polyoxyethylen-Copolymer verwendet. Gemäß Seite 650, rechte Spalte, erster vollständiger Abschnitt, dieser Schrift wurde gefunden, dass das Tensid keinen Einfluss auf die rheologischen Eigenschaften hat.

Nachteilig an den beschriebenen Gelmassen bzw. deren Herstellung ist die Beschränkung auf solche Formteile, die durch Gießen sowie ggf. anschließendes Beschneiden zugänglich sind.

Aufgabe der vorliegenden Erfindung war die Bereitstellung eines Verfahrens zur Herstellung von Gelmassen, mit dem eine größere Varianz von Formen auf einfache Weise zugänglich ist.

Überraschenderweise wurde gefunden, dass durch Zugabe von organomodifizierten Siloxanen zur Reaktionsmischung diese thixotrope Eigenschaften erhält bzw. die thixotropen Eigenschaften verstärkt werden können und somit die Reaktionsmischungen auf einfache Weise, durch übliche Formgebungsverfahren, wie z. b. Extrusion oder Strangpressen, zu formstabilen Strängen geformt werden kann.

Gegenstand der vorliegenden Erfindung sind deshalb Formmassen, enthaltend die Komponenten, a) ein oder mehrere Polyisocyanate, b) ein oder mehrere Polyole, c) ein oder mehrere die Reaktion zwischen Polyisocyanat und Polyol katalysierende Katalysatoren und d) ein oder mehrere pyrogen hergestellte Oxide eines Metalls oder Metalloids, welche sich dadurch auszeichnen, dass sie als weitere Komponente e) mindestens ein oder mehrere Siloxane der Formel (I) enthalten, Formteile erhältlich unter Verwendung dieser Formmassen sowie ein Verfahren zur Herstellung der Formteile.

Die erfindungsgemäßen Formmassen haben den Vorteil, dass sie auf einfache Weise mit üblichen Formgebungsverfahren zu formstabilen Formteilen geformt werden können. Diese formstabilen Formteile reagieren anschließend zu den gewünschten Endprodukten ab.

Die erfindungsgemäßen Formmassen können insbesondere den Vorteil aufweisen, dass sie eine höhere Fließgrenze als solche Formmassen aufweisen, die keine Verbindung der Formel (I) enthalten.

Handelt es sich bei den Formmassen um solche, die keine Treibmittel enthalten und die zu Gel-artigen Formteilen verarbeitet werden sollen, so haben die erfindungsgemäßen Formmassen den weiteren Vorteil, dass die nach der GelReaktion erhaltenen Formteile den aus dem Formgebungsverfahren bereits erhaltenen formstabilen Formteilen entsprechen oder zumindest im wesentlichen entsprechen, die Änderung aller Dimensionen also kleiner 20 % beträgt. Auf eine Nachbearbeitung, insbesondere auf eine nachträgliche Formgebung kann somit gegebenenfalls oder auch häufig verzichtet werden.

Das erfindungsgemäße Verfahren hat den Vorteil, dass durch kontrollierte Zugabe des Siloxans die rheologischen Eigenschaften des Systems gezielt eingestellt werden können. So kann z.B. beim Austragen eines Stranges die Konzentration des Siloxans der Formel (I) derart angepasst werden, dass es möglich ist, Anfang und Ende einer (kreisförmigen) Dichtschnur mit einem homogenem Übergang herzustellen.

Ein weiterer Vorteil des erfindungsgemäßen Verfahrens liegt in der einfachen Möglichkeit, die Thixotropie/Viskosität gezielt einstellen zu können (Ein- und Ausschalten bzw. gezieltes Einstellen der Thixotropie bzw. Viskosität). Dies kann durch einfache Zugabe einer flüssigen Komponente (Siloxan der Formel (I)) erfolgen, woraus auch eine einfache Verarbeitung resultiert. Die herkömmlichen Methoden sind recht umständlich und endgültig d.h. eine fixe Viskosität wird erzeugt.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Unter Polyurethan (PU) wird im Rahmen der vorliegenden Erfindung ein Produkt erhältlich durch Reaktion von Isocyanaten und Polyolen bzw. Verbindungen mit Isocyanat-reaktiven Gruppen. Es können hierbei neben dem Namen gebenden, Polyurethan auch weitere funktionelle Gruppen gebildet werden, wie z.B. Allophanate, Biurete, Harnstoffe oder Isocyanurate. Daher werden unter PU im Sinne der vorliegenden Erfindung sowohl Polyurethan als auch Polyisocyanurat verstanden.

Die erfindungsgemäßen Formmassen, enthaltend die Komponenten,
a) ein oder mehrere Polyisocyanate,
b) ein oder mehrere Polyole,
c) ein oder mehrere die Reaktion zwischen Polyisocyanat und Polyol katalysierende Katalysatoren und
d) ein oder mehrere pyrogen hergestellte Oxide eines Metalls oder Metalloids, zeichnen sich dadurch aus, dass die Formmassen als weitere Komponente
e) mindestens ein oder mehrere Siloxane der Formel (I) wie in den Ansprüchen definiert enthalten, mit der Maßgabe, dass die Formmasse weniger als 2 Gew.-%, vorzugsweise weniger als 0,2 Gew.-% bezogen auf die Gesamtzusammensetzung der Formmasse an physikalischem Treibmittel sowie weniger als 2 Gew.-% Wasser aufweist, wobei die Zusammensetzung 100 Gewichtsteile Polyol, 1 bis 30 Gewichtsteile pyrogenes Oxid, 0,05 bis 1,5 Gewichtsteile Katalysator, 0,25 bis 7,5 Gewichtsteile Siloxan der Formel (I), 0 bis 50 Gewichtsteile Flammschutzmittel und einen Isocyanat-Index von 13 bis 80 aufweist.

Bevorzugt beträgt der zahlengemittelte molare Anteil an Alkylenoxydeinheiten mit R'=H bezogen auf alle Alkylenoxydeinheiten in den Resten R¹ mindestens 80%, bevorzugt mindestens 90% und/oder mindestens 80 % der Reste R" stehen für Wasserstoff. Ganz besonders bevorzugt erfindungsgemäße Formmassen enthalten als Komponente e) solche Siloxanverbindungen der Formel (I), bei denen der Quotient Q= Anzahl Si-Atome/Anzahl Reste R¹ (jeweils im Zahlenmittel pro Molekül) von größer 5 bis kleiner-gleich 16, vorzugsweise größer 8 bis kleiner-gleich 12 beträgt. In der erfindungsgemäßen Formmasse beträgt der Anteil der Komponente d) von 1 bis 30 Gewichtsteile, bevorzugt von 5 bis 20 Gewichtsteile pro 100 Gewichtsteile der Komponente b) und/oder, bevorzugt und, der Anteil der Komponente e) in der Formasse beträgt bevorzugt 0,5 bis 3 Gewichtsteile pro 100 Gewichtsteile der Komponente b).

### Komponente a)

Grundsätzlich können alle aliphatischen, cykloaliphatischen und aromatischen Isocyante bzw. deren Modifikationen und Prepolymere eingesetzt werden. Die verwendeten Polyisocyanate können eine oder mehere Isocyanatgruppen enthalten, vorzugsweise sollten die Isocyanate mindestens difunktionell sein. Zur Herstellung von Formmassen, insbesondere Gelmassen besonders geeignete Isocyanate sind z.B. in EP 1 125 975 A1 beschrieben. Zur Herstellung von Gelmassen ganz besonders geeignete Isocyanate sind z. B. Toluol-2,4-diisocyanat (TDI), Methylendiphenyldiisocyanat (MDI), Hexamethylendiisocyanat (HMDI), Isophorondiisocyanat (IPDI) oder 4,4'-Diisocyanatodicyclohexylmethan (H12MDI). Besonders bevorzugt werden prepolymere Isocyanate auf Basis von HDI und MDI mit Funktionalitäten von 2 bis 4 eingesetzt.

### Komponente b)

Als Komponente b) können alle mit Isocyanatgruppen reaktiven Verbindungen oder deren Abmischungen eingesetzt werden. Zur Herstellung der erfindungsgemäßen Formmassen, insbesondere Gelmassen, werden als Komponente b) vorzugsweise solche Polyole eingesetzt, wie in EP 1125975 A1 beschrieben. Bevorzugt werden als Komponenten b) Polyetherpolyole mit einer OH-Zahl von <100 und einer Funktionalität von 2 bis 8, besonders bevorzugt mit einer OH-Zahl <60 und einer Funktionalität von 3 bis 6 eingesetzt.

### Komponente c)

Als Komponente c) können alle Katalysatoren eingesetzt werden, die die Reaktion zwischen Isocyanatgruppen und mit Isocyanat reaktiven Gruppen katalysieren.

Als Katalysatoren können z. B. tertiäre Amine, wie Triethylamin, Tributylamin, N-Methyl-morpholin, N-Ethyl-morpholin, N,N,N,N-Teramethyl-ethylendiamin, 1,4-Diaza-bicyclo-(2,2,2)-octan, N-Methyl-N-dimethylaminoethyl-piperazin, N,N-Dimethylbenzylamin, Bis-(N,N-diethylaminoethyl)adipat, Pentamethyldiethylentriamin, N,N-Dimethylcyclohexylamin, N,N,N',N'-Tetramethyl-1,3-butandiamin, N,N-Dimethyl-ß-phenylethylamin, 1,2-Dimethylimidazol und 2-Methylimidiazol, Mannichbasen aus sekundären Aminen, wie z. B. Dimethylamin, und Aldhyden, vorzugsweise Formaldehyd, oder Ketonen, wie Aceton, Methylethylenketon oder Cyclohexanon, und Phenolen, wie Phenol, Nonylphenol oder Bisphenolen, Silaamine mit Kohlenstoff-Silizium-Bindungen, wie sie z. B. in DE-PS 1 229 290 und US-PS 3 620 984 beschrieben werden, vorzugsweise 2,2,4-Trimethyl-2-silamorpholin oder 1,3-Diethylaminomethyl-tetramethyl-disiloxan, stickstoffhaltige Basen, vorzugsweise Tetralkylammoniumhydroxide, Alkalihydroxide, vorzugsweise Natriumhydroxid, Alkaliphenolate, vorzugsweise Natriumphenolat, oder Alkalialkoholate, vorzugsweise Natriummethylat, Hexahydrothiazine, oder organische Metallverbindungen, insbesondere organische Zinn-, Zirkonium-, Bismuth-, Titan- oder Zinkverbindungen oder -salze eingesetzt werden.

Weitere Katalysatoren, sowie Einzelheiten über die Wirkungsweise der Katalysatoren sind im Kunststoff-Handbuch Band VII, herausgegeben von Vieweg und Höchtlen, Carl-Hanser-Verlag München 1966, z. B. auf den Seiten 96-102 beschrieben. Es können auch Gemische verschiedener Katalysatoren verwendet werden.

Die Katalysatoren können z. B. in einer Menge von 0,01 bis 10 Gew.-%, bezogen auf das Gesamtgewicht des Gemisches zur Gelmassen-Herstellung eingesetzt werden.

Als Komponente c) sind in der erfindungsgemäßen Formmasse vorzugsweise tertiäre Amine, insbesondere eines der oben genannten Amine, und/oder organische Zinn-, Bismuth- oder Zinksalze, insbesondere von Carbonsäuren mit 8 bis 18 Kohlenstoffatomen, enthalten. Als Komponente c) ist in der erfindungsgemäßen Formmasse (zur Herstellung von Gelen) besonders bevorzugt Bismuthtrisneodecanoat enthalten.

### Komponente d)

Die pyrogen hergestellten Oxide können bevorzugt auf dem Wege der Flammenhydrolyse hergestellt werden. Pyrogen hergestellte Oxide von Metallen und/oder Metalloiden sind bekannt aus Ullmanns Enzyklopädie der technischen Chemie 4. Auflage, Band 21, Seiten 464 und 465 (1982). Die erfindungsgemäßen Formmassen können physikalische Gemische von pyrogen hergestellten Oxiden von Metallen und/oder Metalloiden und/oder auf pyrogenem Wege hergestellte Mischoxide von Metallen und/oder Metalloiden enthalten.

Vorzugsweise werden eines oder mehrere der folgenden pyrogen hergestellten Oxide eingesetzt: Siliciumdioxid, Aluminiumoxid, Mischoxid aus Siliciumdioxid und Aluminiumoxid, Titandioxid, Mischoxid aus Titandioxid und Eisenoxid. Als Komponente d) ist in der erfindungsgemäßen Formmasse bevorzugt Siliciumdioxid enthalten.

Besonders bevorzugt werden pyrogen hergestellte Siliciumdioxide, die oberflächenbehandelt sind, wie zum Beispiel Aerosil^{®} R 8200, Aerosil^{®} R972, Aerosil^{®} R974, Aerosil^{®} R805, Aerosil^{®} R 202 oder Aerosil^{®} R812, als Komponente d) eingesetzt. Diese Oxide sind in Schriftenreihe Pigmente Nr. 27 (August 1993) Degussa AG beschrieben.

Als Oberflächenbehandlungsmittel für die pyrogen hergestellten Oxide können z. B. eingesetzt werden:
Dimethyldichlorsilan, Trimethyldichlorsilan, Hexamethyldisilazan, Polydimethylsiloxane, Alkylsilane wie zum Beipiel Trimethoxyoctylsilan oder Triethoxyoctylsilan.

Insbesondere können die in den Tabellen 1 a und 1 b angegebenen pyrogen hergestellten hydrophilen bzw. hydrophoben Oxide eingesetzt werden:

**Tabelle 1 a: Hydrophile Oxide**

| **Prüfmethode** | | AEROSIL 90 | AEROSIL 130 | AEROSIL 150 | AEROSIL 200 | AEROSIL 300 | AEROSIL 380 | AEROSIL OX 50 | AEROSIL TT 600 | AEROSIL MOX 80 | AEROSIL MOX 170 | AEROSIL COK 84 |
|---|---|---|---|---|---|---|---|---|---|---|---|---|
| **Verhalten gegenüber Wasser** | | hydrophil | | | | | | hydrophil | | | | |
| **Aussehen** | | lockeres weißes Pulver | | | | | | lockeres weißes Pulver | | | | |
| **Oberfläche nach BET¹)** | m2/g | 90+15 | 130+25 | 150+15 | 200+25 | 300+30 | 380+30 | 50+15 | 200+50 | 80+20 | 170+30 | 170+30 |
| **Mittlere Größe der Primärteilchen** | nm | 20 | 16 | 14 | 12 | 7 | 7 | 40 | 40 | 30 | 15 | - |
| **Stampfdichte (ca.-Wert)²⁾** | g/l | 80 | 50 | 50 | 50 | 50 | 50 | 130 | 60 | 60 | 50 | 50 |
| **verdichtete Ware (Zusatz"V")** | g/l | 120 | 120 | 120 | 120 | 120 | 130 | | | | | |
| **VV-Ware (Zusatz"VV")** | g/l | | | 50/75 | 50/75 | 50/75 | | | | | | |
| | g/l | | | | 120/150 | 120/150 | | | | | | |
| **Trocknungsverlust ³⁾ (2 Stunden bei 105°C) bei Verlassen des Lieferwekes** | % | <1,0 | <1,5 | <0,59) | <1,5 | <1,5 | <2,0 | <1,5 | <2,5 | <1,5 | <1,5 | <1,5 |
| **Glühverlust⁴⁾⁷⁾** (2 Stunden bei 1000°C) | % | <1 | <1 | <1 | <1 | <2 | <2,5 | <1 | <2,5 | <1 | <1 | <1 |
| **pH**-**Wert⁵⁾** | | 3,7-4,7 | 3,7-4,7 | 3,7-4,7 | 3,7-4,7 | 3,7-4,7 | 3,7-4,7 | 3,8-4,8 | 3,6-4,5 | 3,6-4,5 | 3,6-4,5 | 3,6-4,3 |
| **SiO₂** ⁸⁾ | % | >99,8 | >99,8 | >99,8 | >99,8 | >99,8 | >99,8 | >99,8 | >99,8 | >98,3 | >98,3 | 82-86 |
| **AlO₂O₃**⁸⁾ | % | <0,05 | <0,05 | <0,05 | <0,05 | <0,05 | <0,05 | <0,08 | <0,05 | 0,3-1,3 | 0,3-1,3 | 14-18 |
| **Fe₂O₃**⁸⁾ | % | <0,003 | <0,003 | <0,003 | <0,003 | <0,003 | <0,003 | <0,01 | <0,003 | <0,01 | <0,01 | <0,1 |
| **TiO₂**⁸⁾ | % | <0,03 | <0,03 | <0,03 | <0,03 | <0,03 | <0,03 | <0,03 | <0,03 | <0,03 | <0,03 | <0,03 |
| **HCl**⁸⁾¹⁰⁾ | % | <0,025 | <0,025 | <0,025 | <0,025 | <0,025 | <0,025 | <0,025 | <0,025 | <0,025 | <0,025 | <0,1 |
| **Siebrückstand** ⁶⁾ nach Mocker, 45 mm) | % | <0,05 | <0,05 | <0,05 | <0,05 | <0,05 | <0,05 | <0,2 | <0,05 | <0,1 | <0,1 | <0,1 |

| | | | | | | | | | | | | |
|---|---|---|---|---|---|---|---|---|---|---|---|---|
| 1) in Anlehnung an DIN 66131 2) in Anlehnung an DIN ISO 787/XI, JIS K 5101/18 (nicht gesiebt) 3) in Anlehnung an DIN ISO 787/II, ASTM D 280, JIS K 5101/21 4) in Anlehnung an DIN 55921, ASTM D 1280, JIS K 5101/23 5) in Anlehnung an DIN ISO 787/IX, ASTM D 1208, JIS K 5101/24 6) in Anlehnung an DIN ISO 787/XVIII, JIS K 5101/20 7) bezogen auf die 2 Stunden bei 105°C getrocknete Substanz 8) bezogen auf die 2 Stunden bei 1000°C geglühte Substanz 9) spezielle vor Feuchtigkeit schützende Verpackung 10) HCl-Gehalt ist Bestandteil des Glühverlustes 11) V-Ware wird in Säcken zu 20 kg geliefert 12) VV-Ware wird zur Zeit ausschließlich vom Werk Rheinfelden geliefert | | | | | | | | | | | | |

**Tabelle 1b: Hydrophobe Oxide**

| **Prüfmethode** | | AEROSIL R 972 | AEROSIL R 974 | AEROSIL R 202 | AEROSIL R 805 | AEROSIL R 812 | AEROSIL R 812 S | AEROSIL R 104 | AEROSIL R 106 |
|---|---|---|---|---|---|---|---|---|---|
| **Verhalten gegenüber Wasser** | | hydrophob | | | | | | | |
| **Aussehen** | | lockeres weißes Pulver | | | | | | | |
| **Oberfläche nach BET¹⁾** | m2/g | 110+20 | 170+20 | 100+20 | 150+25 | 260+30 | 220+25 | 150+25 | 250+30 |
| **Mittlere Größe der Primärteilchen** | nm | 16 | 12 | 14 | 12 | 7 | 7 | 12 | 7 |
| **Stampfdichte / ca.-Wert²⁾** | | | | | | | | | |
| **normale Ware** | g/l | 50 | 50 | 50 | 50 | 50 | 50 | 50 | 50 |
| **verdichtete Ware (Zusatz"V")** | g/l | 90 | 90 | | | | | | |
| **Trocknungsverlust ³⁾** | | | | | | | | | |
| **(2 Stunden bei 105°C ) bei Verlassen des Lieferwekes** | % | <0,5 | <0,5 | <0,5 | <0,5 | <0,5 | <0,5 | - | - |
| **Glühverlust⁴⁾⁷⁾** | | | | | | | | | |
| (2 Stunden bei 1000°C) | % | <2 | <2 | 4-6 | 5-7 | 1,0-2,5 | 1,5-3,0 | - | - |
| **C-Gehalt** | % | 0,6-1,2 | 0,7-1,3 | 3,5-5,0 | 4,5-6,5 | 2,0-3,0 | 3,0-4,0 | 1-2 | 1,5-3,0 |
| **pH-Wert**⁵⁾ | | 3,6-4,4 | 3,7-4,7 | 4-6 | 3,5-5,5 | 5,5-7,5 | 5,5-7,5 | >4,0 | >3,7 |
| **SiO₂** ⁸⁾ | % | >99,8 | >99,8 | >99,8 | >99,8 | >99,8 | >99,8 | >99,8 | >99,8 |
| **AlO₂O₃** ⁸⁾ | % | <0,05 | <0,05 | <0,05 | <0,05 | <0,05 | <0,05 | <0,08 | <0,05 |
| **Fe₂O₃** ⁸⁾ | % | <0,01 | <0,01 | <0,01 | <0,01 | <0,01 | <0,01 | <0,01 | <0,01 |
| **TiO₂** ⁸⁾ | % | <0,03 | <0,03 | <0,03 | <0,03 | <0,03 | <0,03 | <0,03 | <0,03 |
| **HCl**^{8) 10)} | % | <0,05 | <0,1 | <0,025 | <0,025 | <0,025 | <0,025 | <0,002 | <0,025 |

| | | | | | | | | | |
|---|---|---|---|---|---|---|---|---|---|
| 1. in Anlehnung an DIN 66131 2. in Anlehnung an DIN ISO 787/XI, JIS K 5101/18 (nicht gesiebt) 3. in Anlehnung an DIN ISO 787/II, ASTM D 280, JIS K 5101/21 4. in Anlehnung an DIN 55921, ASTM D 1280, JIS K 5101/23 5. in Anlehnung an DIN ISO 787/IX, ASTM D 1208, JIS K 5101/24 6. bezogen auf die 2 Stunden bei 105°C getrocknete Substanz 7. bezogen auf die 2 Stunden bei 1000°C geglühte Substanz 8. spezielle vor Feuchtigkeit schützende Verpackung 9. HCl-Gehalt ist Bestandteil des Glühverlustes 10. in Wasser: Methanol = 1:1 11. HCl-Gehalt ist Bestandteil des Glühverlustes 12. V-Ware wird in Säcken zu 15 kg netto geliefert | | | | | | | | | |

| **Eigenschaften** | **AEROSIL R 8200** |
|---|---|
| Verhalten gegenüber Wasser | hydrophob |
| Oberfläche nach BET m²/g | 160±25 |
| Stampfdichte g/l | ca. 140 |
| Trocknungsverlust ( 2 h bei 105°C) % | ≤ 0,5 |
| pH-Wert (4%ig in Wasser) | ≥ 5,5 |
| Kohlenstoffgehalt % | 2,0 - 4,0 |
| SiO₂ % | ≥ 99,8 |
| Fe₂O₃ % | ≤ 0,01 |
| TiO₂ % | ≤ 0,03 |
| HCl % | ≤ 0,025 |

Bevorzugt sind die Komponenten d) keine Zeolithe.

### Komponente e)

Die Verbindungen der Formel (I) können z. B. durch eine Hydrosilylierungsreaktion (Umsetzungen der Si-H-funktionellen Siloxanen mit Allylpolyethern), wie sie z.B. in EP 1 520 870 A beschrieben wird, erhalten werden. Die Hydrosilylierungsreaktion kann insbesondere so wie in Beispiel 1 der genannten Schrift beschrieben durchgeführt werden.

Die zur Herstellung der Verbindungen der Formel (I) einzusetzenden Si-H-funktionellen Siloxan können z. B. wie in der Schrift EP 1439200 A beschrieben, insbesondere in Beispiel 1 selbiger Schrift beschrieben, durch Äquilibrierung hergestellt werden. Für die Herstellung von Siloxanen mit endständigem Wasserstoff muss entsprechend ein Polymethylwasserstoffsiloxan mit endständiger Wasserstoff-Funktionalität als Rohstoff verwendet werden. Die Art und Menge der Rohstoffe ist dabei so zu wählen, dass die jeweils gewünschte Siloxanstruktur erhalten wird.

Die Herstellung der Allyl-Polyether kann z. B. analog zu der in der Schrift DE 19940797 beschriebenen Methode, insbesondere nach der in Beispiel 1 dieser Schrift beschriebenen Methode, erfolgen.

Die erfindungsgemäßen Formmassen können Wasser aufweisen, insbesondere können die erfindungsgemäßen Formmassen Wasser aufweisen, wenn als Katalysatorkomponente c) Bismuthverbindungen oder -salze eingesetzt werden.

Die erfindungsgemäßen Formmassen weisen aber weniger als 2 Gew.-% an Wasser bezogen auf die Formmasse, bevorzugt weniger als 0,2 Gew.-% an Wasser und insbesondere kein Wasser auf. Das Wasser führt nicht zu einem Aufschäumen des Reaktionsgemisches.

Die erfindungsgemäßen Formmassen weisen vorzugsweise keine Komponenten auf, die ein chemisches Treibmittel darstellen. Unter chemischen Treibmitteln werden solche verstanden, die unter den Reaktionsbedingungen ein Gas abspalten bzw. produzieren, mit Ausnahme von Wasser. Insbesondere weist die erfindungsgemäße Formmasse das chemische Treibmittel Ameisensäure nicht auf. Wasser insoweit vorhanden, stellt gemäß der vorstehenden Erläuterung kein chemisches Treibmittel dar.

Unter physikalischen Treibmitteln werden im Rahmen der vorliegenden Erfindung solche Verbindungen verstanden, die bei Normaldruck und einer Temperatur von kleiner 50 °C, bevorzugt kleiner 25 °C gasförmig vorliegen und mit keiner der sonstigen in der Formmasse vorliegenden Verbindung chemisch reagieren.

Bevorzugte physikalische Treibmittel sind ausgewählt aus der Gruppe umfassend Kohlendioxid, Aceton, Kohlenwasserstoffen, wie z. B. n-, iso- oder Cyclopentan, Cyclohexan und halogenierte Kohlenwasserstoffen, wie z. B. Methylenchlorid, Tetrafluorethan, Pentafluorpropan, Heptafluorpropan, Pentafluorbutan, Hexafluorbutan oder Dichlormonofluorethan.

Wie oben ausgeführt können die erfindungsgemäßen Formmassen physikalische Treibmittel aufweisen, jedoch in den oben angegebenen geringen Konzentrationen. Die Dichte der resultierenden erfindungsgemäßen Formteile beträgt vorzugsweise größer-gleich 500 Kilogramm pro Kubikmeter, bevorzugt größer-gleich 700 Kilogramm pro Kubikmeter, besonders bevorzugt größer gleich 900 kg pro Kubikmeter. Bevorzugt weisen die erfindungsgemäßen Formmassen kein physikalisches Treibmittel auf.

Neben den genannten Komponenten a) bis e) können die erfindungsgemäßen Formmassen weitere Bestandteile aufweisen. Der Anteil dieser weiteren Bestandteile an der Gesamtzusammensetzung kann bis zu 75 Gew.-% bezogen auf die Gesamtzusammensetzung betragen. Vorzugsweise weisen die erfindungsgemäße ein oder mehrere Bestandteile ausgewählt aus Flammschutzmittel, Antioxidantien, UV-Schutzmittel, anorganische und/oder organische Füllstoffe, die nicht unter die Definition der Komponente d) fallen, färbende Agenzien, wasserbindende Mittel, oberflächenaktive Substanzen, die nicht unter die Definition der Komponente e) fallen, Pflanzenschutzmittel, Streckmittel und/oder Weichmacher.

Als Flammschutzmittel werden bevorzugt solche eingesetzt, die flüssig und/oder in der Formmasse bzw. in einer der anderen eingesetzten Komponenten löslich sind. Bevorzugt kommen handelsübliche phosphorhaltige Flammschutzmittel zum Einsatz, beispielsweise Diphenylkresylphosphat, Trikresylphosphat, Tris(2-chlorethyl)phosphat, Tris(2-chlorpropyl)phosphat, Tris(2,3-dibrompropyl)phosphat, Tris- (1,3-dichlorpropyl)phosphat, Tetrakis(2-chlorethyl)ethylendiphosphat, Trisbutoxyethylphosphat, Dimethylmethanphosphonat, Diethylethanphosphonat, Diethanolaminomethylphosphonsäurediethylester. Ebenfalls geeignet sind halogen- und/oder phosphorhaltige, flammschützend wirkende Polyole und/oder Melamin sowie Blähgraphit. Die Flammschutzmittel werden bevorzugt in einer Menge von maximal 35 Gew.-%, bevorzugt maximal 20 Gew.-%, bezogen auf die Polyolkomponente, eingesetzt.

Als anorganische Füllstoffe weist die Formmasse vorzugsweise Schwerspat, Kreide, Gips, Kieserit, Soda, Kaolin, Ruß, Metallpulver, wie z. B. Eisen- oder Kupferpulver und/oder Mikroglaskugeln auf.

Als organische Füllstoffe können in der Formmasse zum Beispiel Pulver auf Basis von Polystyrol, Polyvinylchlorid, Harnstoff-Formaldehyd-Massen und/oder Polyhydrazodicarbonamiden (z. B. aus Hydrazin und Toluylendiisocyanat erhaltene) enthalten sein. Dabei können zum Beispiel Harnstoff-Formaldehyd-Harze oder Polyhydrazodicarbonamide direkt in einem für die erfindungsgemäße Formmasse zu verwendenden Polyole hergestellt worden sein. Es können auch Mikrohohlkugeln organischer Herkunft zugefügt werden.

Anorganische und/oder organische Füllstoffe können auch in Form von Kurzfasern vorhanden sein. Als Kurzfasern kommen zum Beispiel Glasfasern und/oder Fasern organischer Herkunft zum Beispiel Polyester- oder Polyamidfasern infrage. Die Kurzfasern weisen vorzugsweise eine Länge von 0,01 bis 1 cm auf.

Als färbende Agenzien können erfindungsgemäße Formmassen zum Beispiel für die Einfärbung von Polyurethan an sich bekannte Farbstoffe und/oder Farbpigmente auf organischer und/oder anorganischer Basis enthalten, beispielsweise Eisenoxid- und/oder Chromoxidpigmente und Pigmente auf Phtalocyanin- und/oder Monoazo-Basis, wobei als färbende Agenzien kein pyrogenes Oxid, insbesondere kein pyrogenes Oxid, ausgewählt aus Siliciumdioxid, Aluminiumoxid, Mischoxid aus Siliciumdioxid und Aluminiumoxid, Titandioxid oder Mischoxid aus Titandioxid und Eisenoxid eingesetzt wird.

Als wasserbindende Mittel können vorzugsweise Zeolithe vorhanden sein. Geeignete synthetische Zeolithe sind zum Beispiel unter der Bezeichnung Baylith^{®} im Handel.

Als Streckmittel sind in der erfindungsgemäßen Formmasse bevorzugt flüssige, praktisch inerte Substanzen vorhanden, die einen Siedepunkt von über 150°C (bei Normaldruck) aufweisen. Beispielsweise seien genannt: Alkyl-, alkoxy- und/oder halogensubstituierte aromatische Verbindungen wie Dodecylbenzol, m-Dipropoxylbenzol und/oder o-Dichlorbenzol, halogenierte aliphatische Verbindungen wie chlorierte Paraffine, organische Carbonate wie Propylencarbonat, Carbonatsäureester wie Dioctylphthalat sowie Dodecylsulfonsäureester und organische Phosphorverbindungen, wie Trikresylphosphat.

Als Weichmacher können in der erfindungsgemäßen Formmasse zum Beispiel Ester von Phosphorsäure oder mehrwertigen, vorzugsweise zweiwertigen Carbonsäuren mit einwertigen Alkoholen, wie z. B. Ester von Bernsteinsäure, Isophpthalsäure, Trimelitsäure, Phthalsäureanhydrid, Tetra- und/oder Hexadrophthalsäureanydrid, Endomethylentetrahydrophthalsäureanhydrid, Glutarsäureanhydrid, Maleinsäureanhydrid, Fumarsäure und/oder dimeren und/oder trimeren Fettsäuren wie Ölsäure, gegebenenfalls in Mischung mit monomeren Fettsäuren gebildet mit verzweigten und/oder aliphatischen Alkoholen mit 1 bis 20 C-Atomen, wie z. B. Methanol, Ethanol, Propanol, Isopropanol. n-Butanol, sek.-Butanol, tert.-Butanol, den verschiedenen Isomeren des Pentylalkohols, Hexylalkohols, Octylalkohols (zum Beispiel 2-Ethyl-Hexanol), Nonylalkohols, Decylalkohols, Decylalkohols. Laurylalkohols, Myristylalkohols, Cetylalkohols, Stearylalkohol und/oder von natürlich vorkommenden oder durch Hydrierung natürlich vorkommender Carbonsäuren erhältlichen Fett- und Wachsalkoholen, oder cycloaliphatischen und/oder aromatischen Hydroxyverbindungen, wie beispielsweise Cyclohexanol und dessen Homologe, Phenol, Kresol, Thymol, Carvacrol, Benzylalkohol und/oder Phenylethanol. Selbstverständlich können auch gemischte Ester der obengenannten Alkohole und Carbonsäuren eingesetzt werden.

Bevorzugt können auch Phosphorsäureester aus halogenierten Alkoholen, wie zum Beispiel Trichlorethylphosphat, in der Formmasse enthalten sein. Diese haben den Vorteil, dass gleichzeitig mit dem Weichmacher-Effekt ein flammhemmender Effekt erzielt werden kann.

Bei den Weichmachern kann es sich auch um sogenannte polymere Weichmacher handeln, zum Beispiel um Polyester der Adipin-, Sebacin- und/oder Phthalsäure. Weiter sind auch Alkylsulfonsäureester des Phenols, z. B. Paraffinsulfonsäurephenylester, als Weichmacher verwendbar.

Die erfindungsgemäßen Formmassen können zur Herstellung von Formteilen verwendet werden. Insbesondere können die erfindungsgemäßen Formmassen in dem nachfolgend beschriebenen erfindungsgemäßen Verfahren eingesetzt werden.

Das Verfahren zur Herstellung von Formteilen basierend auf Reaktionsprodukten von ein oder mehreren Polyisocyanaten und einem oder mehreren Polyolen, zeichnet sich dadurch aus, dass eine erfindungsgemäße Formmasse mit einem formgebenden Verfahren zu einem Formteil umgearbeitet wird, und die Reaktion zur Herstellung der Reaktionsprodukte mindestens auch nach dem formgebenden Verfahren abläuft.

In dem erfindungsgemäßen Verfahren wird die Formmasse vorzugsweise vor oder während des formgebenden Verfahrens durch Mischen der Komponenten erzeugt. Das Mischen erfolgt vorzugsweise Mittels einer Mischdüse. Die Komponenten können alle einzeln oder auch in verschiedenen Vormischungen der Mischdüse zugeführt werden. Vorzugsweise werden Mischungen enthaltend Komponenten b), c) und d) der Mischdüse zugeführt während die Komponenten a) und e) jeweils getrennt zugeführt werden.

Die Reaktion zum Erhalt der Reaktionsprodukte startet, wenn Komponenten a) bis c) in Kontakt gebracht werden. Das Kontaktbringen der Komponenten a) bis c) erfolgt deshalb vorzugsweise erst kurz vor oder während des formgebenden Verfahrens, so dass vor dem Erhalt des Formteils die Reaktion noch nicht abgeschlossen ist. Vorzugsweise wird das Verfahren so durchgeführt, dass nach der Umarbeitung des Formteils höchstens 50 % des theoretisch möglichen Umsatzes erfolgt ist. Bevorzugt werden die Komponenten in einem Mischkopf oder statischen Mischer direkt vor dem Austragen in eine Form oder auf eine Oberfläche vermischt. Hierbei kann nach dem erfindungsgemäßen Verfahren z.B. über die geometrische Form der Austragsdüse ein entsprechend geformter Strang hergestellt werden. Die Verweilzeit im Mischkopf oder Mischer ist dabei vorzugsweise kleiner 20, bevorzugt kleiner 10 Sekunden. Die Aushärtung, also Polyurethanreaktion, erfolgt vorzugsweise in 30 sec. bis 15 min. und kann über die Wahl und Menge des Katalysators eingestellt werden.

Es kann vorteilhaft sein die Reaktionsmischung zu Temperieren. Bevorzugt werden die Reaktionen dann unterhalb von 90°C, mehr bevorzugt unterhalb von 50°C und insbesondere bevorzugt unter 25°C durchgeführt.

In dem erfindungsgemäßen Verfahren werden bevorzugt Formmassen eingesetzt, die keine Treibmittel aufweisen.

Mittels des erfindungsgemäßen Verfahrens sowie durch Reaktion einer geformten erfindungsgemäßen Formmasse können die erfindungsgemäßen Formteile erhalten werden. Das erfindungsgemäße Formteil ist vorzugsweise eine Gelmasse (Gelkörper).

Die erfindungsgemäßen Gelmassen haben die Eigenschaft, sich unter Krafteinwirkung zu deformierten und nach der Wegnahme der deformierenden Kraft nahezu vollständig in ihren Ausgangszustand zurückzugehen. Diese Eigenschaft bewirkt, dass Elemente, welche die erfindungsgemäßen Gelmassen enthalten, in der Lage sind, sich unter Druck zu verformen, Oberflächen anzupassen und Unebenheiten ausgleichen. Diese Eigenschaft bleibt auch nach mehrmaligen Be- und Entlasten der Gelmasse erhalten.

Bauteile, die erfindungsgemäße Gelmassen enthalten, können in vielfältiger Weise angewendet werden, zum Beispiel als dichtende Elemente. Die direkte Applikation als Dicht-, und oder Dehnungselement mit freier Geometrie ist erfindungsgemäß möglich. Im Besonderen ist es möglich, die Formmasse ohne weitere formgebenden Hilfsmittel auf Oberflächen aufzubringen und so ein Dichtelement, beispielsweise eine Dichtraupe, mit völlig freier Geometrie zu applizieren. Die Beschichtung von Oberflächen mit beliebigen Steigungen und vertikalen Ebenen ist ebenfalls möglich. Die Variation der Komponente e) ermöglicht die Einstellung einer definierten Thixotropie/Viskosität, was besonders für den homogenen Übergang von Beginn und Ende eines ringförmigen Dichtelements von Vorteil ist. Die Variation der Komponente e) kann zu diesem Zweck während der Dosierung erfolgen, im Besonderen im Bereich des Übergangs von Beginn und Ende der Dichtelement-Dosierung.

Die Querschnittsgeometrie der Gelmasse kann mit einer entsprechend gestalteten Blende angepasst werden, d.h. die extrudierte Gelmasse kann wahlweise eine runde, eckige oder andersförmige Querschnittsgeometrie aufweisen. Beispielhafte Anwendungen hierfür sind jegliche Formen von Gehäuseabdichtungen, im Besonderen solche die nicht räumlich eingefasst oder eben sind d.h. wofür eine nicht fließfähige Formmasse notwendig ist.

Ebenso ist die Applikation von Gelpolstern als schwingungsdämpfendes Element möglich, besonders zur Reduzierung von Körperschall. Die Formmasse kann durch Sprühen, Gießen, Tauchen, Streichen oder sonstige Verarbeitungsformen aufgebracht werden. Die einstellbare ausgeprägte Thixotropie der erfindungsgemäßen Formmasse ermöglicht es, Geometrien und Schichtdicken zu erzeugen, welche durch eine niedrig viskose (bzw. nicht thixotrope) Formmasse nicht zugänglich wären.

Besonders das Sprühen der Formmasse wird durch die mögliche Variation der Komponente e) und der daraus resultierenden Variation der Viskosität (oder Thixotropie - also scherratenabhängige Viskosität), sehr begünstigt. Das Fertigen einer Sprühhaut mit gleichmäßiger Schichtdicke in Werkzeugen beliebiger Geometrie ist ebenso möglich. Eine gelartige Sprühhaut kann beispielsweise für "Soft-touch"-Elemente eingesetzt werden, wie beispielsweise Dekorfolien für Instrumententafeln. Die erfindungsgemäße Gelmasse ist adhäsiv und kann somit als Klebemedium eingesetzt werden, beispielsweise als Montagehilfe für Dichtelemente.

Besonders bevorzugt ist das erfindungsgemäße Formteil ein Dichtelement, eine Montagehilfe, ein Klebemedium, ein Soft-Touch-Element, ein Gelpolster oder ein schwingungsdämpfendes Element oder wird als Dichtelement, als Montagehilfe, als Klebemedium, als Soft-Touch-Element, als Gelpolster oder als schwingungsdämpfendes Element verwendet.

Eine Polyurethan-Gelformulierung im Sinne dieser Erfindung hat die folgende Zusammensetzung:

### Zusammensetzung:

| Komponente | Gewichtsanteil |
|---|---|
| Polyol | 100 |
| pyrogenes Oxid | 1 bis 30 |
| Katalysator | 0,05 bis 1,5 |
| Siloxan (Formel (I)) | 0,25 bis 7,5 |
| Flammschutzmittel | 0 bis 50 |
| Isocyanat-Index: | 13 bis 80 |

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele

### Beispiel 1: Herstellungen von Mischungen der Komponenten a), b), c), d) und e)

Es wurden Mischungen bestehend aus
a) Polyisocyanat (nur teilweise vorhanden)
b) Polyol
c) Katalysator
d) pyrogen hergestelltem Oxid eines Metalls oder Metalloids
e) organomodifiziertes Siloxan der Formel (I),
hergestellt, um die thixotropen Eigenschaften messtechnisch zu ermitteln.

Durch die Zugabe von Polyisocyanaten - Komponente a) - beginnt die Mischung auszuhärten, was die Messung der rheologischen Eigenschaften erschweren kann. Daher wurden nur wenige Messungen mit einem Isocyanat durchgeführt, um nachzuweisen, dass die thixotropen Eigenschaften erhalten bleiben.

Der Erhalt der Thixotropie konnte auch durch entsprechende Versuche in den Beispielen 3 durch das Gießen von nicht zerfließendem Material auf einer glatten Oberfläche nachgewiesen werden.

### Beschreibung der verwendeten Komponeten a) bis e)

Folgendes Polyisocyanat wurde verwendet:
Nr. 1: difunktionelles HDI-Prepolymer mit einem NCO-Gehalt von 12,5% mit einer Viskosität von 4000 mPa*s

Folgende Polyole wurden verwendet:
Nr. 1: trifunktionelles Polyalkylenglykol bestehend aus EO und PO mit 82 Mol-% Anteil PO, mit einer OH-Zahl von 35 mg KOH/g und einer Viskosität von 860 mPa*s
Nr. 2: trifunktionelles Polyalkylenglykol, bestehend aus PO mit einer OH-Zahl von 56 mg KOH/g und einer Viskosität von 660 mPa*s, erhältlich bei als Arcol Polyol 1104 bei Bayer Material Science
Nr. 3: trifunktionelles Polyalkylenglykol, bestehend aus EO und PO mit 85 Mol-% Anteil PO, OH-Zahl = 32 mg KOH/g, und einer Viskosität von 1390 mPa*s erhältlich als Hyperlite 1629 bei Bayer Material Science
Nr. 4: trifunktionelles Polyalkylenglykol, bestehend aus PO, mit einer OH-Zahl von 56 mg KOH/g und einer Viskosität von 550 mPa*s, erhältlich als Voranol CP 3322 bei Dow

Folgender Katalysator wurde verwendet:
Nr. 1: Bismuttris(neodecanoat) - COSCAT 83^{®} von Erbslöh

Folgende pyrogene Oxide wurden verwendet:
Nr. 1: Aerosil^{®} R 8200 von Evonik Industries AG
Nr. 2: Aerosil^{®} R 805 von Evonik Industries AG

### Folgende Siloxane wurden verwendet:

Organomodifizierte Siloxane der Formel (I),

R-Si(CH₃)₂-O-[-Si(CH₃)₂-O-]ₙ-[-Si(CH₃)R¹-O-]ₘ-Si(CH₃)₂-R²

mit Resten R¹ der Formel (II).

-(CH₂)ₓ-(O)_{z}-(CH₂-CHR'-O)_{y}-R",

Die einzusetzenden Si-H-funktionellen Siloxan wurden, wie in Beispiel 1 der Schrift EP 1439200 A1 beschrieben, aus den entsprechenden Siloxan-Rohstoffen durch Äquilibrierung hergestellt (Für die Herstellung von Siloxanen mit endständiger Modifizierung muss entsprechend ein Polymethylwasserstoffsiloxan mit endständigem Wasserstoff-Funktionalität als Rohstoff verwendet werden.). Die Art und Menge der Rohstoffe wurde so gewählt, dass die jeweils gewünschte Siloxanstruktur erhalten wurde.

Die Herstellung der Allyl-Polyether erfolgte analog zu der in Beispiel 1 der DE 19940797 A1 beschriebenen Methode, wobei hier Allylalkohol als Starter und entsprechend Ethylenoxid und Propylenoxid oder Styroloxid verwendet wurden.

Die Hydrosilylierungsreaktionen (Umsetzungen der Si-H-funktionellen Siloxane mit den Allylpolyethern) wurden entsprechend dem Beispiel 1 in der Schrift EP 1520870 A1 durchgeführt.

In Tabelle 1 sind die verwendeten Strukturen der Reste R¹ zusammengefasst. Tabelle 2 beschreibt die erfindungsgemäßen Siloxane. Es wurden die in Formel (I) verwendeten Bezeichnungen und Indices verwendet. Alle % -Angaben in Tabelle 1 und Tabelle 2 sind mol-%. In den Tabellen 1 und 2 steht die Abkürzung Me für eine Methylgruppe.

**Tabelle 1: Beschreibung der Seitenketten R¹:**

| Name | R' | R" | x | y | z |
|---|---|---|---|---|---|
| A | 35 mol % Me; 65 mol% H | H | 3 | 23 | 1 |
| B | 20 mol % Me; 80 mol% H | H | 3 | 15 | 1 |
| C | 100 mol% H | H | 3 | 12 | 1 |
| D | 20 mol % Me; 80 mol% H | H | 3 | 13 | 1 |
| E | 100 mol% H | H | 3 | 8 | 1 |
| F | - | H | 6 | 0 | 1 |
| G | 100 mol% H | H | 3 | 1 | 1 |
| H | 100 mol% H | Me | 3 | 8 | 1 |

**Tabelle 2: Beschreibung der Siloxane Nr. 1 bis 17:**

| Siloxan | R | R² | R¹ | n | m |
|---|---|---|---|---|---|
| 1 | Me | Me | 100 mol% E | 35 | 3 |
| 2 | Me | Me | 100 mol% C | 28 | 10 |
| 3 | R¹ | R¹ | 100 mol% A | 40 | 3 |
| 4 | Me | Me | 100 mol% C | 20 | 2 |
| 5 | Me | Me | 100 mol% B | 50 | 7 |
| 6 | Me | Me | 100 mol% E | 60 | 7 |
| 7 | R¹ | R¹ | 100 mol% C | 17 | 1 |
| 8 | R¹ | R¹ | 100 mol% E | 75 | 1 |
| 9 | Me | Me | 100 mol% E | 75 | 5 |
| 10 | Me | Me | 100 mol% D | 35 | 3 |
| 11 | R¹ | R¹ | 100 mol% F | 9 | 0 |
| 12 | R¹ | R¹ | 100 mol% E | 35 | 3 |
| 13 | Me | Me | 100 mol% E | 65 | 13 |
| 14 | Me | Me | 100 mol% E | 40 | 10 |
| 15 | Me | Me | 100 mol% G | 40 | 3 |
| 16 | R1 | R1 | 100 mol% H | 35 | 3 |
| 17 | Me | Me | 100 mol% H | 60 | 7 |

Es wurden verschiedene Mischungen durch Mischen der entsprechenden Ausgangsstoffe hergestellt. Hierbei wurden die Aerosil-Typen mit Hilfe einer Dispergierscheibe bei Drehzahlen von 500 bis 2000 U/min in die entsprechenden Polyole eingerührt. Die weiteren Komponenten (Katalysator, Siloxane und optional Isocyanat) wurden anschließend bei niedrigeren Drehzahlen von 50 bis 500 eingerührt.

Die Menge der verwendeten Ausgangsstoffe können Tabelle 3 entnommen werden. Alle genannten Mischungen enthielten 0,2 Teile Bismuttrisneodecanoat bezogen auf 100 Teile Polyol.

**Tabelle 3: Zusammensetzung der Mischungen in Massenanteilen**

| | Polyol | | Pyrogenes Oxid | | Siloxan | |
|---|---|---|---|---|---|---|
| Bsp.-Nr. | Nr. | Teile | Nr. | Teile | Nr. | Teile |
| 1.Vgl.1 | 1 | 100 | 1 | 15 | - | |
| 1.1 | 1 | 100 | 1 | 15 | 6 | 3 |
| 1.2 | 1 | 100 | 1 | 15 | 6 | 0,5 |
| 1.3 | 1 | 100 | 1 | 15 | 12 | 0,5 |
| 1.4 | 1 | 100 | 1 | 15 | 6 | 1 |
| | | | | | | |
| 1.Vgl.2 | 1 | 100 | 2 | 10 | - | |
| 1.5 | 1 | 100 | 2 | 10 | 6 | 1 |
| 1.6 | 1 | 100 | 2 | 10 | 8 | 1 |
| 1.7 | 1 | 100 | 2 | 10 | 9 | 1 |
| 1.8 | 1 | 100 | 2 | 10 | 12 | 1 |
| | | | | | | |
| 1.Vgl. 3 | 4 | 100 | 2 | 10 | | |
| 1.9 | 4 | 100 | 2 | 10 | 6 | 1 |
| 1.10 | 4 | 100 | 2 | 10 | 4 | 1 |
| 1.11 | 4 | 100 | 2 | 10 | 5 | 1 |
| 1.12 | 4 | 100 | 2 | 10 | 3 | 1 |
| | | | | | | |
| 1.Vgl. 4 | 3 | 100 | 2 | 10 | | |
| 1.13 | 3 | 100 | 2 | 10 | 1 | 1 |
| 1.14 | 3 | 100 | 2 | 10 | 2 | 1 |
| 1.15 | 3 | 100 | 2 | 10 | 7 | 1 |
| 1.16 | 3 | 100 | 2 | 10 | 6 | 1 |
| | | | | | | |
| 1.Vgl. 5 | 2 | 100 | 1 | 15 | | |
| 1.17 | 2 | 100 | 1 | 15 | 6 | 3 |
| 1.18 | 2 | 100 | 1 | 15 | 6 | 2 |
| 1.19 | 2 | 100 | 1 | 15 | 6 | 1 |
| 1.20 | 2 | 100 | 1 | 15 | 5 | 1 |
| 1.21 | 2 | 100 | 1 | 15 | 10 | 1 |
| 1.22 | 2 | 100 | 1 | 15 | 4 | 1 |
| 1.23 | 2 | 100 | 1 | 15 | 3 | 1 |
| 1.24 | 2 | 100 | 1 | 15 | 11 | 1 |
| 1.25 | 2 | 100 | 1 | 15 | 13 | 1 |
| 1.26 | 2 | 100 | 1 | 15 | 14 | 1 |
| 1.27 | 2 | 100 | 1 | 15 | 15 | 1 |
| 1.28 | 2 | 100 | 1 | 15 | 16 | 1 |
| 1.29 | 2 | 100 | 1 | 15 | 17 | 1 |
| | | | | | | |
| | | | | | | |
| 1 .Vgl.6 *) | 1 | 100 | 1 | 15 | - | |
| 1.30*) | 1 | 100 | 1 | 15 | 6 | 2 |
| 1.31*) | 1 | 100 | 1 | 15 | 6 | 3 |

| | | | | | | |
|---|---|---|---|---|---|---|
| *) Hier waren zusätzlich noch 12 Teile Isocyanat Nr. 1 enthalten | | | | | | |

Bei Beispiel 1.24, enthaltend Polysiloxan Nr. 11, bei welchem y als 0 definiert ist, handelt es sich um ein nicht erfindungsgemäßes Referenzbeispiel.

### Beispiel 2: Bestimmung der thixotropen Eigenschaften der Mischungen

Die Messungen wurden mit einem Rheometer von Anton Paar, Modell MCR 301, Platte - Platte (40 mm) Geometrie bei einer Temperatur von 25°C durchgeführt. Bestimmt wurden für die gemäß Beispiel hergestellten Mischungen Speichermodul, Verlustmodul, Fließgrenze und Erholungszeiten der Fließgrenze. Die Proben wurden in Oszillation von 0,1 bis 200 Pa gemessen (20 Punkte, 1 Hz). Aus den Plateauwerten des linear viskoelastischen Bereiches (LVE) wurde das Speicher- und Verlustmodul bestimmt. Die Fließgrenze gibt die Schubspannung an, bei der das Speichermodul vom idealen viskoelastischen Verhalten abweicht.

Die Erholung nach Scherung wurde bestimmt, in dem die Probe 100 Sekunden (20 x 5 Sekunden) bei 1 Pa (1 Hz) gemessen wurde. Anschließend wurde die Schubspannung auf 500 Pa (1 Hz) für 100 Sekunden (20 x 5) erhöht bevor wieder bei 1 Pa (1 Hz) gemessen wurde. Aus der Zeit, die das Speichermodul benötigt um größer als das Verlustmodul zu sein, wird die Erholungszeit bestimmt. Die Ergebnisse der Messungen gemäß Beispiel 2 sind in Tabelle 4 zusammengefasst.

**Tabelle 4: Rhelogische Eigenschaften der Mischungen gemäß Beispiel 1**

| Mischung | Speichermodul / Pa. | Verlustmodul / Pa | Fließgrenze / Pa | Erholungszeit / s |
|---|---|---|---|---|
| 1.Vgl.1 | 0,1 | 6,1 | - | - |
| 1.1 | 9290 | 4460 | 12,2 | 0 |
| 1.2 | 1030 | 445 | 5,5 | 15 |
| 1.3 | 383 | 209 | 2,5 | 40 |
| 1.4 | 4370 | 1610 | 12,2 | 0 |
| | | | | |
| 1.Vgl. 2 | 52 | 72,8 | - | - |
| 1.5 | 1630 | 718 | 1,7 | 0 |
| 1.6 | 675 | 311 | 2,5 | 0 |
| 1.7 | 1880 | 584 | 1,7 | 0 |
| 1.8 | 3400 | 927 | 3,7 | 0 |
| | | | | |
| 1.Vgl. 3 | 2930 | 733 | 2,5 | 0 |
| 1.9 | 8820 | 1500 | 18,1 | 0 |
| 1.10 | 7290 | 993 | 8,1 | 0 |
| 1.11 | 7900 | 1370 | 3,7 | 5 |
| 1.12 | 11800 | 2120 | 12,2 | 0 |
| | | | | |
| 1.Vgl. 4 | 46,4 | 65,4 | | |
| 1.13 | 2080 | 600 | 1,7 | 0 |
| 1.14 | 1410 | 500 | 1,7 | 0 |
| 1.15 | 303 | 212 | 2,5 | 5 |
| 1.16 | 3860 | 820 | 8,2 | 0 |
| | | | | |
| 1.Vgl. 5 | 22,7 | 36 | - | - |
| 1.17 | 14700 | 3110 | 15,7 | 0 |
| 1.18 | 18700 | 4020 | 11,5 | 0 |
| 1.19 | 15600 | 3210 | 15,7 | 0 |
| 1.20 | 2450 | 965 | 6,1 | 5 |
| 1.21 | 377 | 204 | 4,5 | 15 |
| 1.22 | 5160 | 1590 | 11,5 | 0 |
| 1.23 | 396 | 247 | 4,5 | 20 |
| 1.24 | 685 | 316 | 2,5 | 0 |
| 1.25 | 3550 | 1042 | 4,5 | 0 |
| 1.26 | 3120 | 867 | 3,7 | 0 |
| 1.27 | 715 | 345 | 2,5 | 0 |
| 1.28 | 1340 | 626 | 4,5 | 0 |
| 1.29 | 4200 | 190 | 6,1 | 0 |
| | | | | |
| | | | | |
| 1.Vgl.6 | 3,7 | 16,7 | | |
| 1.30 | 1790 | 826 | 5,7 | 0 |
| 1.31 | 4040 | 1450 | 8,7 | 0 |

Die Messungen belegen, dass durch Zugabe der Siloxane die Mischungen ein thixotropes Verhalten bekommen oder wie in den Beispielen 1.Vg1.3 , 1.9, 1.10, 1.11 und 1.12 die Thixotropie einer Zusammensetzung verstärkt werden konnte. Dadurch ist es möglich auf einen höheren Füllgrad an Aerosil zu verzichten und trotzdem eine Erhöhung der Fließgrenze zu erreichen.

In den anderen Beispielen konnte erst durch die Zugabe der Siloxane die Thixotropie erreicht werden.

### Beispiel 3: Herstellung von PU-Gelmassen

### Herstellung der Kombination Komponente b), c) und d) (Polyolmischung):

Komponente b) wurde vorgelegt. Komponente c) wurde mit einem Propellerrührwerk bei einer Drehzahl von 500 U/Min homogen eingemischt. Anschließend wurde Komponente d) mittels Dispergierscheibe bei einer Drehzahl von 3000 U/Min 5 Minuten dispergiert. Die so entstandene Polyolmischung wurde zwei Stunden bei Unterdruck (0,2 bar absolut) entgast.

### Herstellung der Kombination Polyolmischung, Komponente a) und e) (Formmasse):

Die Polyolmischung, sowie Komponente a) und Komponente e) wurden mit einer 3K-Niederdruckdosieranlage gefördert und vermischt. Die Homogenisierung der Einzelkomponenten erfolgte mit einem statisch-dynamischen Mischrohr 13-12-SR-POM. Mischerdrehzahl = 4000U/Min, Massenstrom ca. 600g/Min. Die Zudosierung von Komponente e) konnte wahlweise ein- oder ausgeschaltet werden.

Für die nachstehend genannten Versuche Beispiel 3.1 und Beispiel 3.2 wurden die Zusammensetzungen der Bsp-Nr. 1.31 und 1.Vgl.6 aus Tabelle 3 gewählt. Vergleichend wurden je 10 mL der Formmassen punktförmig auf eine glatte Unterlage aufgetragen. Die Durchmesser der aufgetragenen Formmassen-Punkte wurden direkt nach dem Auftrag und 30 Sekunden nach dem Auftrag ermittelt. Weiterhin wurde an Zusammensetzungen der Bsp-Nr. 1.31 und 1.Vgl.6 der Einfluss von Komponente e) auf die Materialeigenschaft Bruchdehnung und Zugfestigkeit (ISO 53504 - S2-Prüfstab mit 3mm Materialstärke) geprüft.

### Beispiel 3.1 (nicht erfindungsgemäß)

Der Auftrag einer Formasse entsprechend der Zusammensetzung aus Beispiel 1.Vgl.6 ergibt einen Formmassen-Punkt von 6 cm Durchmesser, nach 30 Sekunden von 9 cm, d.h. die Formmasse fließt. Die ermittelte Bruchdehnung betrug 1251% und die Zugfestigkeit betrug 1,68 MPa.

### Beispiel 3.2 (erfindungsgemäß)

Der Auftrag einer Formasse entsprechend der Zusammensetzung aus Beispiel 1.31 ergibt eine Formmasse mit einem Durchmesser von 4 cm, nach 30 Sekunden von 4 cm, d.h. die Formmasse fließt nicht. Die ermittelte Bruchdehnung betrug 1198% und die Zugfestigkeit betrug 1,52 MPa.

Durch Zugabe der Komponente e) (Beispiel 3.2) wird eine Fließgrenze erzeugt (Tabelle 4). In einer kommerziellen Anwendung kann die Formmasse somit direkt als Formkörper appliziert werden, da sie nicht zerfließt. In der Praxis bedeutet dies, dass die erfindungsgemäße Formmasse direkt als Formkörper appliziert werden kann, während nicht erfindungsgemäße Formmassen ihre Form unmittelbar nach der Applizierung verlieren.

Die mechanischen Eigenschaften der Gelmassen wurden durch die Zugabe von Komponente e) nicht signifikant beeinflusst. Die Änderungen betragen <10% bezogen auf die ursprünglichen Eigenschaftswerte, d.h. die in EP 1125975 A1 beschriebene Verbesserung der Geleigenschaften bleibt annähernd erhalten.

## Patentansprüche

1. Formmasse, enthaltend die Komponenten,
a) ein oder mehrere Polyisocyanate,
b) ein oder mehrere Polyole,
c) ein oder mehrere die Reaktion zwischen Polyisocyanat und Polyol katalysierende Katalysatoren und
d) ein oder mehrere pyrogen hergestellte Oxide eines Metalls oder Metalloids, **dadurch gekennzeichnet, dass** die Formmasse als weitere Komponente
e) mindestens ein oder mehrere Siloxane der Formel (I)
R-Si(CH₃)₂-O-[-Si(CH₃)₂-O-]ₙ-[-Si(CH₃)R¹-O-]ₘ-Si(CH₃)₂-R² (I)
mit
R, R¹ und R² gleich oder verschieden,
R und/oder R² gleich Methyl oder R¹,
R¹ gleich oder verschieden -(CH₂)ₓ-(O)_{z}-(CH₂-CHR'-O)_{y}-R",
R' gleich oder verschieden -H, -CH₃, -CH₂CH₃, oder Phenyl-Rest,
R" gleich oder verschieden -H, -(CO)-R''',-(CO)-NH-R''' oder -Alkyl, vorzugsweise C₁ bis C₄₀-Alkyl, bevorzugt C₁- oder C₆ bis C₃₀-Alkyl,
R''' gleich oder verschieden C₁ bis C₄₀-Alkyl, -Aryl oder -Alkylaryl; optional auch mit Halogenen substituiert,
n+m+2 = 10 bis 150, vorzugsweise 12 bis 85, besonders bevorzugt 15 bis 47,
m = 0 bis 20, vorzugsweise 1 bis 4,
x = 3 bis 10,
y = 1 bis 40, vorzugsweise 2 bis 19,
z = 1,
wobei die Bausteine (CH₂-CHR'-O) gleich oder unterschiedlich sein können,
mit der Maßgabe, dass für m = 0 mindestens ein Rest R oder R² gleich R¹ ist, aufweist, mit der Maßgabe, dass die Formmasse weniger 2 Gew.-%, vorzugsweise weniger als 0,2 Gew.-%, bezogen auf die Gesamtzusammensetzung der Formmasse an physikalischem Treibmittel sowie weniger als 2 Gew.-% Wasser aufweist,
wobei die Zusammensetzung 100 Gewichtsteile Polyol, 1 bis 30 Gewichtsteile pyrogenes Oxid, 0,05 bis 1,5 Gewichtsteile Katalysator, 0,25 bis 7,5 Gewichtsteile Siloxan der Formel (I), 0 bis 50 Gewichtsteile Flammschutzmittel und einen Isocyanat-Index von 13 bis 80 aufweist.

2. Formmasse nach Anspruch 1, **dadurch gekennzeichnet, dass** als Komponente e) solche Siloxanverbindungen der Formel (I) vorhanden sind, bei denen der zahlengemittelte molare Anteil an Alkylenoxydeinheiten mit R'=H bezogen auf alle Alkylenoxydeinheiten in den Resten R¹ mindestens 80%, bevorzugt mindestens 90% beträgt.

3. Formmasse nach Anspruch 1 oder 2, **dadurch gekennzeichnet, dass** als Komponente e) solche Siloxanverbindungen der Formel (I) vorhanden sind, bei denen mindestens 80% der Reste R" für Wasserstoff stehen.

4. Formmasse nach einem der Ansprüche 1 bis 3, **dadurch gekennzeichnet, dass** als Komponente e) solche Siloxanverbindungen der Formel (I) vorhanden sind, bei denen der Quotient Q= Anzahl Si-Atome/Anzahl Reste R¹, jeweils im Zahlenmittel pro Molekül, von größer 5 bis kleiner-gleich 16, vorzugsweise größer 8 bis kleiner-gleich 12 beträgt.

5. Formmasse nach einem der Ansprüche Anspruch 1 bis 4, **dadurch gekennzeichnet, dass** als Komponente c) Bismuthtrisneodecanoat enthalten ist.

6. Formmasse nach einem der Ansprüche Anspruch 1 bis 5, **dadurch gekennzeichnet, dass** der Anteil der Komponente d) in der Formmasse von 5 bis 20 Gewichtsteile pro 100 Gewichtsteile der Komponente b) beträgt.

7. Verfahren zur Herstellung von Formteilen basierend auf Reaktionsprodukten von ein oder mehreren Polyisocyanaten und einem oder mehreren Polyolen, **dadurch gekennzeichnet, dass** eine Formmasse gemäß einem der Ansprüche 1 bis 6 mit einem formgebenden Verfahren zu einem Formteil umgearbeitet wird, und die Reaktion zur Herstellung der Reaktionsprodukte mindestens auch nach dem formgebenden Verfahren abläuft.

8. Verfahren nach Anspruch 7, **dadurch gekennzeichnet, dass** die Formmasse vor oder während des formgebenden Verfahrens durch Mischen der Komponenten erzeugt wird.

9. Verfahren nach Anspruch 7 oder 8, **dadurch gekennzeichnet, dass** eine Formmasse eingesetzt wird, die kein Treibmittel aufweist.

10. Formteil erhalten durch ein Verfahren gemäß einem der Ansprüche 7 bis 9, wobei das Formteil eine Gelmasse ist.

11. Formteil erhalten durch Reaktion einer geformten Formmasse gemäß einem der Ansprüche 1 bis 6.

12. Formteil nach Anspruch 10 oder 11, **dadurch gekennzeichnet, dass** das Formteil eine Gelmasse ist.

13. Formteil nach Anspruch 10 bis 12, **dadurch gekennzeichnet, dass** das Formteil ein Dichtelement, eine Montagehilfe, ein Klebemedium, ein Soft-Touch-Element, ein Gelpolster oder ein schwingungsdämpfendes Element ist.

14. Verwendung eines Formteils nach mindestens einem der Ansprüche 10 bis 12 als Dichtelement, als Montagehilfe, als Klebemedium, als Soft-Touch-Element, als Gelpolster oder als schwingungsdämpfendes Element.

## Claims

1. Moulding composition comprising the following components:
a) one or more polyisocyanates,
b) one or more polyols,
c) one or more catalysts catalysing the reaction between polyisocyanate and polyol and
d) one or more pyrogenically produced oxides of a metal or of a metalloid,
**characterized in that** the moulding composition comprises, as further component,
e) at least one or more siloxanes of the formula (I)
R-S1(CH₃)₂-O-[-S1(CH₃)₂-O-]ₙ-[-Si(CH₃)R¹-O-]ₘ-Si(CH₃)₂-R² (I)
where
R, R¹ and R² are identical or different,
R and/or R² are methyl or R¹,
R¹, being identical or different, is
- (CH₂)ₓ- (0) _{z}- (CH₂-CHR' -0) _{y}-R'',
R', being identical or different, is -H, -CH₃, - CH₂CH₃, or phenyl moiety,
R", being identical or different, is -H, -(CO)-R''', -(CO)-NH-R''' or -alkyl, preferably C₁ to C₄₀-alkyl, with preference C₁- or C₆ to C₃₀-alkyl,
R''', being identical or different, is C₁ to C₄₀-alkyl, -aryl or -alkylaryl; optionally also substituted with halogens,
n+m+2 = from 10 to 150, preferably from 12 to 85, with particular preference from 15 to 47,
m = from 0 to 20, preferably from 1 to 4,
x = from 3 to 10,
y = from 1 to 40, preferably from 2 to 19,
z = 1,
where the units (CH₂-CHR'-O) can be identical or different,
with the proviso that for m = 0 at least one moiety R or R² is identical with R¹,
with the proviso that the moulding composition comprises less than 2% by weight, preferably less than 0.2% by weight, based on the entire constitution of the moulding composition, of physical blowing agent and also less than 2% by weight of water,
wherein the composition comprises 100 parts by weight of polyol, from 1 to 30 parts by weight of pyrogenic oxide, from 0.05 to 1.5 parts by weight of catalyst, from 0.25 to 7.5 parts by weight of siloxane of the formula (I), from 0 to 50 parts by weight of flame retardant and an isocyanate index from 13 to 80.

2. Moulding composition according to Claim 1, **characterized in that** siloxane compounds of the formula (I) present as component e) are those in which the numeric-average molar proportion of alkylene oxide units where R'=H, based on all of the alkylene oxide units in the moieties R¹, is at least 80%, preferably at least 90%.

3. Moulding composition according to Claim 1 or 2, **characterized in that** siloxane compounds of the formula (I) present as component e) are those in which at least 80% of the moieties R'' are hydrogen.

4. Moulding composition according to any of Claims 1 to 3, **characterized in that** siloxane compounds of the formula (I) present as component e) are those in which the quotient Q = number of Si atoms/number of moieties R¹, in each case in numeric average per molecule, is from more than 5 to less than or equal to 16, preferably from more than 8 to less than or equal to 12.

5. Moulding composition according to any of Claims 1 to 4, **characterized in that** bismuth trisneodecanoate is present as component c).

6. Moulding composition according to any of Claims 1 to 5, **characterized in that** the proportion of component d) in the moulding composition is from 5 to 20 parts by weight per 100 parts by weight of component b).

7. Process for the production of mouldings based on reaction products of one or more polyisocyanates and one or more polyols, **characterized in that** a moulding composition according to any of Claims 1 to 6 is converted to a moulding by a shaping process, and the reaction for the production of the reaction products at least continues after the shaping process.

8. Process according to Claim 7, **characterized in that** the moulding composition is produced via mixing of the components prior to or during the shaping process.

9. Process according to Claim 7 or 8, **characterized in that** a moulding composition comprising no blowing agent is used.

10. Moulding obtained via a process according to any of Claims 7 to 9, where the moulding is a gel.

11. Moulding obtained via reaction of a moulded moulding composition according to any of Claims 1 to 6.

12. Moulding according to Claim 10 or 11, **characterized in that** the moulding is a gel.

13. Moulding according to any of Claims 10 to 12, **characterized in that** the moulding is a sealing element, an assembly aid, an adhesion medium, a soft-touch element, a gel cushion or a vibration-damping element.

14. Use of a moulding according to at least one of Claims 10 to 12 as sealing element, as assembly aid, as adhesion medium, as soft-touch element, as gel cushion or as vibration-damping element.

## Revendications

1. Matériau de moulage, contenant les composants :
a) un ou plusieurs polyisocyanates,
b) un ou plusieurs polyols,
c) un ou plusieurs catalyseurs catalysant la réaction entre le polyisocyanate et le polyol, et
d) un ou plusieurs oxydes d'un métal ou métalloïde fabriqués par voie pyrogène,
**caractérisé en ce que** le matériau de moulage comprend en tant que composant supplémentaire
e) au moins un ou plusieurs siloxanes de formule (I)
R-Si (CH₃)₂-O-[-Si(CH₃)₂-O-]ₙ-[-Si(CH₃)R¹-O-]ₘ-Si(CH₃)2-R² (I)
dans laquelle
R, R¹ et R² sont identiques ou différents,
R et/ou R² représentent méthyle ou R¹,
les R¹ sont identiques ou différents, et représentent - (CH₂)ₓ-(O)_{z}-(CH₂-CHR'-O)_{y}-R'',
les R' sont identiques ou différents, et représentent - H, -CH₃, -CH₂CH₃ ou un radical phényle,
les R'' sont identiques ou différents, et représentent -H, -(CO)-R''', -(CO)-NH-R''' ou -alkyle, de préférence alkyle en C₁ à C₄₀, de préférence alkyle en C₁ ou C₆ à C₃₀,
les R''' sont identiques ou différents, et représentent alkyle, aryle ou alkylaryle en C₁ à C₄₀ ; éventuellement également substitué avec des halogènes,
n+m+2 = 10 à 150, de préférence 12 à 85, de manière particulièrement préférée 15 à 47,
m = 0 à 20, de préférence 1 à 4,
x = 3 à 10,
y = 1 à 40, de préférence 2 à 19,
z = 1,
les constituants (CH₂-CHR'-O) pouvant être identiques ou différents,
à condition que lorsque m = 0, au moins un radical R ou R² représente R¹,
à condition que le matériau de moulage comprenne moins de 2 % en poids, de préférence moins de 0,2 % en poids, par rapport à la composition totale du matériau de moulage, d'un agent gonflant physique, ainsi que moins de 2 % en poids d'eau,
la composition comprenant 100 parties en poids de polyol, 1 à 30 parties en poids d'oxyde pyrogène, 0,05 à 1,5 partie en poids de catalyseur, 0,25 à 7,5 parties en poids de siloxane de formule (I), 0 à 50 parties en poids d'agent ignifuge, et présentant un indice d'isocyanate de 13 à 80.

2. Matériau de moulage selon la revendication 1, **caractérisé en ce que** des composés de siloxane de formule (I) dans lesquels la proportion molaire moyennée en nombre d'unités oxyde d'alkylène avec R' = H par rapport à toutes les unités oxyde d'alkylène dans les radicaux R¹ est d'au moins 80 %, de préférence d'au moins 90 %, sont présents en tant que composant e).

3. Matériau de moulage selon la revendication 1 ou 2, **caractérisé en ce que** des composés de siloxane de formule (I) dans lesquels au moins 80 % des radicaux R'' représentent l'hydrogène sont présents en tant que composant e).

4. Matériau de moulage selon l'une quelconque des revendications 1 à 3, **caractérisé en ce que** des composés de siloxane de formule (I) dans lesquels le quotient Q = nombre d'atomes Si/nombre de radicaux R¹ est, à chaque en moyenne en nombre par molécule, de supérieur à 5 à inférieur ou égal à 16, de préférence de supérieur à 8 à inférieur ou égal à 12, sont présents en tant que composant e).

5. Matériau de moulage selon l'une quelconque des revendications 1 à 4, **caractérisé en ce que** du trisnéodécanoate de bismuth est contenu en tant que composant c).

6. Matériau de moulage selon l'une quelconque des revendications 1 à 5, **caractérisé en ce que** la proportion du composant d) dans le matériau de moulage est de 5 à 20 parties en poids pour 100 parties en poids du composant b).

7. Procédé de fabrication de pièces moulées à base des produits de réaction d'un ou de plusieurs polyisocyanates et d'un ou de plusieurs polyols, **caractérisé en ce qu'**un matériau de moulage selon l'une quelconque des revendications 1 à 6 est transformé par un procédé de façonnage en une pièce moulée, et la réaction pour la fabrication des produits de réaction se déroule au moins également après le procédé de façonnage.

8. Procédé selon la revendication 7, **caractérisé en ce que** le matériau de moulage est formé par mélange des composants avant ou pendant le procédé de façonnage.

9. Procédé selon la revendication 7 ou 8, **caractérisé en ce qu'**un matériau de moulage qui ne comprend pas d'agent gonflant est utilisé.

10. Pièce moulée obtenue par un procédé selon l'une quelconque des revendications 7 à 9, dans laquelle la pièce moulée est un matériau en gel.

11. Pièce moulée obtenue par réaction d'un matériau de moulage façonné selon l'une quelconque des revendications 1 à 6.

12. Pièce moulée selon la revendication 10 ou 11, **caractérisée en ce que** la pièce moulée est un matériau en gel.

13. Pièce moulée selon les revendications 10 à 12, **caractérisée en ce que** la pièce moulée est un élément d'étanchéité, un auxiliaire de montage, un agent adhésif, un élément à toucher doux, un coussin de gel ou un élément amortissant les oscillations.

14. Utilisation d'une pièce moulée selon au moins l'une quelconque des revendications 10 à 12 en tant qu'élément d'étanchéité, auxiliaire de montage, agent adhésif, élément à toucher doux, coussin de gel ou élément amortissant les oscillations.
